# FASCICULE DE BREVET EUROPEEN

(11) **EP 4 487 230 B1**
(45) Date de publication et mention de la délivrance du brevet: **15.04.2026**
(21) Numéro de dépôt: 23704797.2
(22) Date de dépôt: 16.02.2023
(51) Int. Cl.: G06F 21/52, G06F 21/55, G06F 21/57

(54) **PROCÉDÉ ET MODULE DE DÉTECTION DE TENTATIVES D'ATTAQUES INFORMATIQUES DANS UN PARC D'ORDINATEURS**
VERFAHREN UND MODUL ZUR ERKENNUNG VON VERSUCHTEN CYBERANGRIFFEN IN EINER FLOTTE VON COMPUTERN
METHOD AND MODULE FOR DETECTING ATTEMPTED CYBER ATTACKS IN A FLEET OF COMPUTERS

(30) Priorité: 28.02.2022 FR 2201751
(43) Date de publication de la demande: 08.01.2025
(73) Titulaire: Orange, 92130 Issy-les-Moulineaux (FR)
(72) Inventeur: BELAIR, Maxime, 92326 Chatillon (FR); LANIEPCE, Sylvie, 92326 Chatillon (FR); OUOROU, Adam, 92326 Chatillon (FR)
(74) Mandataire: Cabinet Beau de Loménie
(86) Numéro de dépôt international: PCT/EP2023/053824
(87) Numéro de publication internationale: WO 2023/161105

(56) Documents cités:
- FR-A1- 3 110 726
- BÉLAIR MAXIME MAXIME BELAIR@ORANGE COM ET AL: "SNAPPY programmable kernel-level policies for containers", PROCEEDINGS OF THE 36TH ANNUAL ACM SYMPOSIUM ON APPLIED COMPUTING, ACMPUB27, NEW YORK, NY, USA, 22 March 2021 (2021-03-22), pages 1636 - 1645, XP058740439, ISBN: 978-1-4503-8128-4, DOI: 10.1145/3412841.3442037
- BÉLAIR MAXIME ET AL: "Leveraging Kernel Security Mechanisms to Improve Container Security : a Survey", vol. 19, 26 August 2019 (2019-08-26), New York, NY, USA, pages 1 - 6, XP055961158, ISBN: 978-1-4503-7164-3, Retrieved from the Internet <URL:https://dl.acm.org/doi/pdf/10.1145/3339252.3340502> [retrieved on 20220914], DOI: 10.1145/3339252.3340502

## Description

### Technique antérieure

L'invention se rapporte au domaine général de la sécurisation des programmes informatiques.

L'invention vise plus particulièrement un procédé pour orchestrer la sécurité informatique d'une infrastructure d'équipements informatiques à l'aide de politiques de mitigation.

On rappelle que lorsqu'un logiciel présente une vulnérabilité, la mitigation ne vise pas à corriger ce logiciel qui continue à s'exécuter normalement, mais à bloquer les effets de la vulnérabilité. Par exemple, si un logiciel présente une faille de sécurité lorsqu'il envoie un paquet particulier via une fonction d'envoi de paquets, une mitigation de cette vulnérabilité peut consister à bloquer le processus d'envoi de ce paquet particulier. La mitigation ne supprime pas la vulnérabilité mais elle la rend inexploitable.

Dans le domaine de la sécurité informatique, les failles de sécurité sont répertoriées dans une liste publique accessible à l'adresse https://cve.mitre.org/, chaque vulnérabilité référencée dans la liste étant identifiée par un identifiant unique CVE (pour Common Vulnerabilities and Exposures en anglais).

Des milliers d'identifiants CVE sont émis chaque année, et un logiciel complexe peut cumuler des centaines de CVE.

La gestion des CVE pour maintenir la sécurité d'un parc d'équipements informatiques peut donc s'avérer excessivement complexe. Les documents Maxime Belair et al: "SNAPPY programmable kernel-level policies for containers", Proceedings of the 36th Annual ACM Symposium on Applied Computing, 2021; et FR3110726A1 constituent l'état de la technique en la matière.

### Exposé de l'invention

L'invention vise à faciliter la gestion de la sécurité d'un parc d'ordinateurs en détectant les processus de ces ordinateurs subissant une tentative d'une attaque informatique. Corollairement, l'invention permet de renforcer la sécurité d'un parc d'ordinateurs.

À cet effet, et selon un premier aspect, l'invention concerne un procédé de détection d'une tentative d'attaque informatique mis en œuvre par un ordinateur, ladite attaque exploitant une vulnérabilité d'une fonction à protéger s'exécutant dans un processus d'un espace utilisateur dudit ordinateur, un lancement de l'exécution de la fonction à protéger ayant pour conséquence l'exécution, avant ladite attaque, d'une fonction du noyau, ledit procédé comportant des étapes de :
- exécution d'une politique de mitigation dans le noyau, la politique de mitigation étant associée à ladite fonction du noyau et étant chargée dans un espace de nommage du noyau associé audit processus et dédié à la sécurité ;
et si ladite politique de mitigation détecte lors de son exécution un vecteur d'attaque pris en charge par ladite politique et ciblant ladite fonction à protéger :
- envoi à un serveur de gestion de sécurité d'un message comportant une donnée représentative dudit processus.

Corrélativement, l'invention propose un module de détection d'une tentative d'attaque informatique dans un ordinateur, ladite attaque exploitant une vulnérabilité d'une fonction à protéger s'exécutant dans un processus d'un espace utilisateur dudit ordinateur, un lancement de l'exécution de ladite fonction à protéger ayant pour conséquence l'exécution, avant ladite attaque, d'une fonction du noyau, ledit module comportant:
- un sous module d'exécution configuré pour exécuter une politique de mitigation dans ledit noyau, ladite politique de mitigation étant associée à ladite fonction du noyau et étant chargée dans un espace de nommage du noyau associé audit processus et dédié à la sécurité ;
- un sous-module d'envoi configuré pour envoyer, à un serveur de gestion de sécurité, un message comportant une donnée représentative du processus, ledit sous-module d'envoi étant configuré pour envoyer ledit message si ladite politique de mitigation détecte un vecteur d'attaque pris en charge par ladite politique et ciblant ladite fonction à protéger.

Ainsi, le procédé permet d'identifier les processus sur lesquels ont lieu des attaques informatiques, une attaque informatique désignant une ou plusieurs instructions permettant de contourner une ou plusieurs règles de sécurité dans l'exécution d'un processus informatique.

On appelle vulnérabilité une faille dans un processus, cette faille permettant, si elle est exploitée, d'outrepasser des règles de sécurité du système informatique sur lequel ce processus est exécuté. Par exemple la vulnérabilité CVE-2021-44228 baptisée « Log4Shell » est présente dans le composant logiciel de journalisation Log4J. Le composant Log4J est utilisé par de nombreuses applications utilisant le langage Java. Cette vulnérabilité permet à un attaquant distant dans les cas les plus sévères de faire exécuter un code arbitraire par la machine cible.

On rappelle qu'un espace de nommage isole, dans une abstraction, l'instance d'une ressource système pour les processus associés à cet espace de nommage. Les modifications apportées à la ressource système sont visibles pour les autres processus associés à l'espace de nommage, mais sont invisibles pour les autres processus. Les espaces de nommage sont notamment utilisés pour mettre en œuvre des conteneurs. On écrira par la suite qu'une ressource système dans un espace de nommage est déclarée par cet espace de nommage.

Un conteneur est un environnement d'exécution sur lequel s'exécutent des processus, un conteneur étant associé à un ensemble d'espaces de nommage permettant d'isoler l'exécution de ces processus du reste des processus du système.

Dans un mode de réalisation, la donnée représentative d'un processus et comprise dans le message est une donnée représentative de l'espace de nommage associé au processus. Le procédé de détection permet alors d'identifier les espaces de nommage, par exemple des conteneurs, subissant une attaque informatique.

Il convient de préciser que les conteneurs ne constituent qu'un exemple non limitatif dans un mode particulier de réalisation du procédé tel que décrit ci-dessus.

Le procédé permet d'envoyer des messages identifiant les espaces de nommages des processus attaqués à un serveur de gestion de sécurité.

Le serveur de gestion de sécurité peut notamment recevoir de tels messages d'autres ordinateurs qui mettent en œuvre ce même procédé de détection.

Également, dans des modes de réalisation du procédé, les messages envoyés à un serveur de gestion de sécurité comprennent les identifiants des vulnérabilités exploitées par les attaques.

Le procédé présenté propose d'utiliser une politique de mitigation exécutée dans le noyau de l'ordinateur. Avantageusement, il n'est pas nécessaire de redémarrer le noyau pour que la politique de mitigation soit effective.

Conformément au procédé, le programme de la politique de mitigation chargée dans le noyau est un programme exécutable. Il ne s'agit pas d'une simple signature ou d'un simple ensemble de règles.

L'exécution de la politique de mitigation au niveau du noyau est déclenchée, directement ou indirectement, par le lancement de l'exécution, dans l'espace utilisateur, de la fonction à protéger.

Par exemple, l'exécution de la politique de mitigation est déclenchée directement par la fonction à protéger, autrement dit par la fonction à protéger elle-même.

Dans un autre exemple, l'exécution de la politique de mitigation est déclenchée indirectement par la fonction à protéger, autrement dit par une autre fonction de l'espace utilisateur dont l'exécution est déclenchée par le lancement de l'exécution de la fonction à protéger.

Dans un mode de réalisation, l''exécution de la politique de mitigation permet à la fois de détecter une attaque utilisant cette fonction, et de bloquer cette attaque.

Par la suite, on écrira que le processus est attaqué, ou bien que le conteneur (ou plus généralement l'espace de nommage) dans lequel s'exécute ce processus est attaqué, si une attaque est déclenchée directement ou indirectement par l'exécution de cette fonction.

Le procédé décrit permet avantageusement de remonter l'information sur des processus attaqués à un serveur de gestion de la sécurité. Cette information peut par exemple identifier les conteneurs, ou plus généralement les espaces de nommage, dans lesquels s'exécutent ces processus. Le serveur de gestion de sécurité peut être contrôlé par un administrateur central.

Ce procédé peut être avantageusement appliqué à une pluralité d'ordinateurs dans un parc informatique, ce qui permet de remonter au serveur de gestion de sécurité l'information sur les attaques subies par chacun des ordinateurs du parc informatique.

Dans ce cas, l'administrateur central a un rôle d'orchestration de la sécurité sur le parc d'ordinateurs.

L'invention permet aussi à l'administrateur central de s'affranchir de la nécessité de consulter de manière manuelle chaque administrateur de chaque ordinateur pour que chacun d'entre eux, par exemple, vérifie manuellement et localement si une vulnérabilité donnée affecte les logiciels de leur machine.

Selon un mode de mise en œuvre particulier du procédé de détection, ladite politique de mitigation est chargée dans un espace de nommage dédié à la sécurité et associé au processus racine dudit ordinateur.

Un ordinateur mettant en œuvre le procédé de détection comprend un processus racine associé à des espaces de nommage dont héritent les espaces de nommage des conteneurs de l'ordinateur. Si une politique de mitigation est déclarée dans l'espace de nommage associé au processus racine et dédié à la sécurité, alors les espaces de nommages associés à chaque conteneur et dédiés à la sécurité héritent de cette politique de mitigation. Autrement dit, un processus s'exécutant dans un conteneur se verra protégé par la politique de mitigation déclarée dans l'espace de nommage associé au processus racine.

Ce mode de réalisation permet avantageusement de surveiller automatiquement tous les conteneurs de l'ordinateur car chaque conteneur hérite des politiques de mitigation de l'espace de nommage associé au processus racine de l'ordinateur.

Ainsi, pour tout conteneur (ou plus généralement pour tout espace de nommage dédié à la sécurité) de l'ordinateur, si un processus de ce conteneur appelle la fonction à protéger, la politique de mitigation est exécutée et permet de détecter si une attaque est en cours dans ce conteneur.

Selon un mode de mise en œuvre particulier de l'invention, le procédé de détection comporte des étapes de :
- réception, en provenance dudit serveur de gestion de sécurité, d'un identifiant de politique de mitigation ;
- installation, dans ledit noyau de l'ordinateur, de la politique de mitigation correspondant audit identifiant de politique de mitigation.

Ce mode de réalisation permet avantageusement à un administrateur central contrôlant le serveur de gestion de sécurité d'orchestrer l'installation de politiques de mitigation dans un parc d'ordinateurs.

Les politiques de mitigation peuvent donc être gérées de façon centralisée, sans demander la contribution des administrateurs d'au moins certains ordinateurs du parc, ce qui permet d'éviter l'installation manuelle de la politique de mitigation sur au moins certaines, par exemple sur toutes les machines du parc.

Selon un mode de mise en œuvre particulier du procédé de détection, ladite étape d'installation comporte des sous-étapes de :
envoi d'une requête comportant l'identifiant de politique de mitigation à un serveur de sécurisation ;
obtention, en réponse à la requête d'un fichier de description de ladite politique de mitigation ;
obtention d'un code objet de la politique de mitigation identifiée dans ledit fichier de description ;
génération d'un code exécutable de ladite politique de mitigation à partir dudit code objet; et
installation du code exécutable dans ledit noyau.

De façon avantageuse, le procédé de détection propose de télécharger le programme de la politique de mitigation appropriée lorsqu'une vulnérabilité affectant un logiciel s'exécutant sur l'équipement informatique a été identifiée, et d'installer automatiquement ce programme dans le noyau de l'équipement pour mitiger cette vulnérabilité.

En variante, il peut être choisi d'installer systématiquement une politique de mitigation sur tous les ordinateurs. Le couplage avec un scanneur de vulnérabilité ici proposé pour n'installer la politique que si ce scanneur détecte que le logiciel est potentiellement vulnérable (indépendamment de son exploitabilité réelle) est une option.

Ce mode de réalisation propose ainsi d'installer au besoin la politique de mitigation à partir d'un serveur de sécurisation.

Cette utilisation d'un serveur de sécurisation permet avantageusement d'économiser de l'espace mémoire sur le noyau de l'ordinateur.

Ce mode de réalisation permet également de mettre à disposition de l'ordinateur une base de données comportant une pluralité de politiques de mitigation pouvant être installées au besoin, sur décision du serveur de gestion de sécurité.

Selon un mode de mise en œuvre particulier du procédé de détection, ladite étape d'envoi dudit message au serveur de gestion de sécurité est mise en œuvre à partir de l'espace utilisateur en réponse à l'envoi d'un signal par le noyau à l'espace utilisateur pour signaler la détection du vecteur d'attaque par la politique de mitigation.

Un signal est envoyé du noyau vers l'espace utilisateur. Cet envoi est déclenché par l'exécution de la politique de mitigation. En particulier, l'envoi du message peut être codé dans la politique de mitigation elle-même. Une partie des données à envoyer peut être codée dans la politique de mitigation et une autre partie peut être récupérée automatiquement depuis le noyau (par exemple l'identifiant de l'espace de nommage dédié à la sécurité et/ou l'identifiant du processus courant).

Ce signal contient l'information sur le processus, par exemple sur l'espace de nommage associé au processus et éventuellement le conteneur de ce processus, et peut identifier l'attaque.

Le message envoyé au serveur de gestion de sécurité peut permettre de caractériser le processus attaqué et/ou son espace de nommage et/ou le conteneur dans lequel le processus s'est exécuté. En particulier, ce message peut reprendre les informations contenues dans le signal transmis à l'espace utilisateur par le noyau, et peut notamment contenir des informations supplémentaires pour caractériser plus précisément le conteneur attaqué, par exemple : nom de l'image conteneur, nom du processus principal, instant de démarrage du conteneur.

De telles informations complémentaires peuvent être utiles notamment si un conteneur est arrêté et relancé. Dans ce cas, un signal obtenu par le noyau ne permet pas de faire le lien entre le conteneur arrêté et le conteneur relancé puisque ce dernier est associé à un espace de nommage dont l'identifiant a changé avec la relance du conteneur. Le nom de l'image conteneur permet notamment de faire ce lien. Les informations complémentaires peuvent également être utiles pour pouvoir appliquer un traitement de sécurité à tous les processus exécutant une image conteneur identique à celle du processus attaqué qui a déclenché l'exécution de la politique de mitigation et l'envoi du signal.

Selon un mode de mise en œuvre du procédé de détection, ledit au moins un message comporte au moins une information parmi :
- un identifiant de l'ordinateur ;
- une donnée représentative de l'espace de nommage associé au processus attaqué et dédié à la sécurité ;
- un identifiant de la vulnérabilité ;
- un instant auquel l'exécution de la politique de mitigation a été déclenchée.

Ce mode de mise en œuvre permet avantageusement de localiser spatialement et temporellement une attaque sur un parc d'ordinateurs mettant en œuvre le procédé de détection.

L'identifiant de l'ordinateur est par exemple son adresse IP (« Internet Protocol » en anglais).

La donnée représentative du conteneur peut par exemple être l'identifiant de l'espace de nommage du conteneur dédié à la sécurité et comprenant la politique de mitigation.

Selon un second aspect, l'invention propose un procédé d'identification mis en œuvre par un serveur de gestion de sécurité pour identifier une tentative d'attaque informatique sur au moins un ordinateur, ladite attaque exploitant une vulnérabilité d'une fonction à protéger s'exécutant dans un espace utilisateur de l'ordinateur. Ce procédé comporte des étapes de :
- réception en provenance dudit au moins un ordinateur, d'un message comportant une donnée représentative d'un processus s'exécutant dans ledit espace utilisateur, lorsqu'un vecteur d'attaque ciblant ladite fonction à protéger a été détecté par l'exécution, dans le noyau de l'ordinateur, d'une politique de mitigation chargée dans un espace de nommage du noyau dédié à la sécurité et associé à ce processus ;
- ajout à une liste d'une donnée représentative de ce message.

Corrélativement, l'invention propose un module d'identification pouvant être mis en œuvre dans un serveur de gestion de sécurité, ledit module étant configuré pour identifier une tentative d'attaque informatique sur au moins un ordinateur, ladite attaque exploitant une vulnérabilité d'une fonction à protéger s'exécutant dans un espace utilisateur de l'ordinateur, ledit module comportant :
- un sous-module de réception configuré pour recevoir en provenance dudit au moins un ordinateur un message comportant une donnée représentative d'un processus s'exécutant dans ledit espace utilisateur, lorsqu'un vecteur d'attaque ciblant la fonction à protéger a été détecté, dans le noyau de l'ordinateur, par l'exécution d'une politique de mitigation chargée dans un espace de nommage du noyau dédié à la sécurité et associé à ce processus;
- un sous-module d'ajout configuré pour ajouter à une liste une donnée représentative dudit message.

L'invention propose un procédé permettant d'identifier, à partir d'un serveur, l'ensemble des processus attaqués dans un parc d'ordinateurs, et/ou les espaces de nommage ou conteneurs associés à ces processus.

Cette identification des processus attaqués permet avantageusement de faciliter l'orchestration de la sécurité sur le parc d'ordinateurs par un administrateur central contrôlant le serveur de gestion de sécurité.

À cet effet, l'invention propose de mettre en commun les messages provenant des ordinateurs attaqués en les ajoutant dans une liste.

Cette liste permet notamment à l'administrateur de prendre des décisions concernant la gestion de la sécurité dans le parc d'ordinateurs. Par exemple, la présence de certaines attaques sur des processus ou conteneurs particuliers peut inciter à installer des programmes de sécurité supplémentaires pour améliorer la sécurité de ces processus ou de ces conteneurs.

Selon un mode particulier de mise en œuvre, le procédé comporte une étape d'envoi audit au moins un ordinateur d'un identifiant de ladite politique de mitigation.

Ainsi, si l'administrateur central prend connaissance d'une nouvelle vulnérabilité mettant en danger le parc d'ordinateurs, l'invention lui permet avantageusement de commander l'installation d'une politique de mitigation sur l'ensemble du parc pour protéger les ordinateurs de cette vulnérabilité.

Ce mode de réalisation permet d'éviter de solliciter les administrateurs des différents ordinateurs pour qu'ils installent manuellement les politiques de mitigation pour protéger ces ordinateurs.

Selon un mode particulier de mise en œuvre de l'invention, le procédé d'identification comporte une étape d'envoi audit au moins un ordinateur, d'un identifiant d'un serveur de sécurisation à partir duquel est extraite ladite politique de mitigation.

Dans un cas où les politiques de mitigation sont réparties sur plusieurs serveurs de sécurisation, l'invention permet à chaque ordinateur d'identifier le serveur de sécurisation auprès duquel télécharger la politique de mitigation souhaitée.

Chacun des procédés décrits ci-dessus peut être mis en œuvre par un programme informatique.

Par conséquent, l'invention vise également un programme d'ordinateur sur un support d'enregistrement, ce programme étant susceptible d'être mis en œuvre dans un équipement informatique ou plus généralement dans un ordinateur. Ce programme comporte des instructions permettant la mise en œuvre d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou un support d'enregistrement lisibles par un ordinateur, et comportant des instructions d'un programme d'ordinateur tel que mentionné ci-dessus.

Le support d'informations ou d'enregistrement peut être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution de l'un des procédés tels que décrits précédemment.

### Brève description des annexes et des figures

D'autres caractéristiques et avantages de la présente invention ressortiront de la description faite ci-dessous, en référence aux dessins annexés qui en illustrent un exemple de réalisation dépourvu de tout caractère limitatif.

Sur les annexes :
[Annexe. 1] L'annexe 1 représente un premier extrait de code exécutable d'une politique de mitigation pouvant être utilisé dans un mode particulier de réalisation ;
[Annexe. 2] L'annexe 2 représente un deuxième extrait de code exécutable d'une politique de mitigation pouvant être utilisé dans un mode particulier de réalisation ;

Sur les figures :
[Fig.1] la [Fig.1] représente une mise en œuvre des procédés de détection et d'identification conforme à un mode particulier de réalisation ;
[Fig.2] la [Fig.2] représente des dispositifs de détection et d'identification conformes à un mode particulier de réalisation ;
[Fig.3] la [Fig.3] représente une étape d'installation du procédé de détection conforme à un mode particulier de réalisation ;
[Fig.4] la [Fig.4] représente un exemple de fichier de description conforme à un mode particulier de mise en œuvre ;
[Fig.5] la [Fig.5] représente des composants d'un noyau d'ordinateur conforme à un mode de réalisation particulier ;
[Fig.6] la [Fig.6] représente une table des processus mémorisée dans un noyau d'ordinateur conforme à un mode particulier de réalisation ;
[Fig.7] la [Fig.7] représente sous forme d'ordinogramme les principales étapes d'un procédé de sécurisation pouvant être mis en œuvre dans un mode particulier de réalisation.

### Description détaillée de plusieurs modes de réalisation particuliers

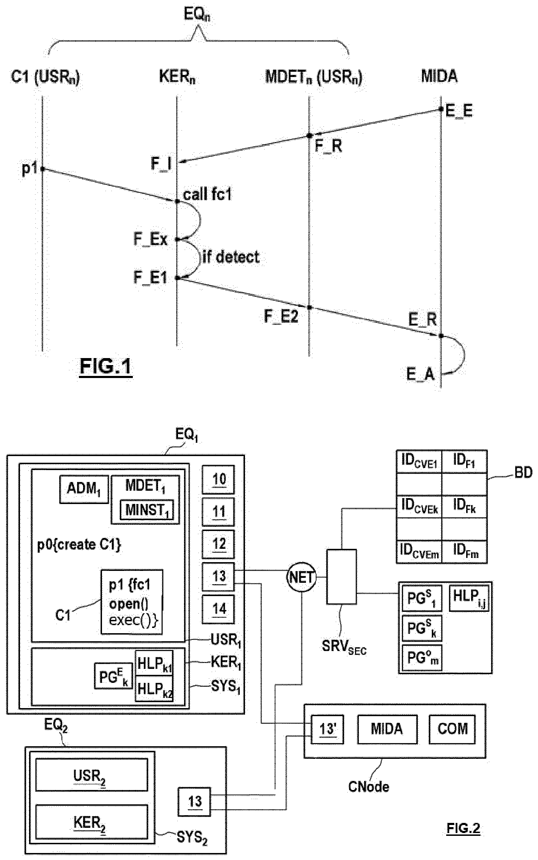

La [Fig.1] représente un mode particulier de réalisation de l'invention dans lequel les procédés de détection et d'identification sont mis en œuvre.

Sur l'exemple représenté par la [Fig.1], un seul ordinateur EQₙ met en œuvre le procédé de détection et le procédé d'identification est mis en œuvre pour identifier des attaques informatiques sur cet ordinateur EQₙ.

Un tel exemple sur un seul ordinateur est représenté par soucis de simplicité mais n'est en rien limitatif de l'invention. En particulier, les procédés de détection et d'identification peuvent être mis en œuvre sur plusieurs ordinateurs.

Il est à préciser que dans d'autres modes de réalisation de l'invention, les procédés de détection et d'identification peuvent être mis en œuvre indépendamment l'un de l'autre.

Les étapes, représentées sur la [Fig.1], du procédé de détection mis en œuvre par l'ordinateur EQₙ sont des étapes de :
- réception F_R, en provenance d'un module MIDA d'un serveur de gestion de sécurité, d'un identifiant d'une politique de mitigation PGₖ ;
- installation F_I de la politique de mitigation PGₖ dans un noyau KERₙ de l'ordinateur EQₙ ;
- exécution F_Ex d'une politique de mitigation PGₖ dans le noyau KERₙ;
- envoi F_E1 d'un signal depuis le noyau KERₙ vers l'espace utilisateur USRₙ ;
- envoi F_E2, en réaction audit envoi F_E1, d'un message Logᵢ de l'espace utilisateur USRₙ vers ledit serveur de gestion de sécurité CNode.

Les étapes du procédé d'identification représentées sur la [Fig.1] sont des étapes de :
- envoi E_E depuis le serveur de gestion de sécurité vers l'ordinateur EQₙ, d'un signal permettant l'installation de politique de mitigation PGₖ ;
- réception E_R du message Logᵢ en provenance de l'espace utilisateur USRₙ de l'ordinateur EQₙ ;
- ajout E_A d'une donnée représentative du message Logᵢ à une liste.

Les étapes du procédé d'identification sont effectuées par un module MIDA du serveur de gestion de sécurité CNode tandis que les étapes du procédé de détection sont effectuées par un module MDETₙ de l'espace utilisateur de l'ordinateur EQₙ.

Le module MIDA envoie et reçoit des signaux ou des messages par l'intermédiaire de moyens de communications 13' représentés sur la [Fig.2].

Le module MDETₙ envoie et reçoit des signaux ou des messages par l'intermédiaire de moyens de communications 13.

Le signal envoyé à l'ordinateur lors de l'étape E_E est par exemple de la forme http://IPHost:port/add_poficy?namespace=0&CVE_ID=CVEID où « IPHost:port » est l'adresse IP de l'ordinateur EQₙ, où l'argument « namespace=0 » indique que la politique de mitigation est à installer dans un espace de nommage du processus racine de l'ordinateur EQₙ, et où l'argument « CVE_ID=CVEID » indique l'identifiant CVEID de la vulnérabilité CVE contre laquelle protéger les conteneurs de l'ordinateur EQₙ.

Il est à noter que l'installation, dans cet exemple, de la politique de mitigation PGₖ dans un espace de nommage du processus racine correspond à un mode particulier de mise en œuvre de l'invention et n'est pas limitatif. Notamment, des espaces de nommage associés à d'autre processus peuvent être choisis pour y installer la politique de mitigation PGₖ. Ainsi, à titre indicatif, le signal envoyé par le serveur de gestion de sécurité et reçu par l'ordinateur peut comporter un argument indiquant l'espace de nommage dans lequel la politique de mitigation PGₖ doit être installée, par exemple un espace de nommage du processus racine ou un autre espace de nommage. Egalement à titre indicatif, le serveur peut envoyer, à plusieurs ordinateurs, des signaux indiquant que la politique de mitigation est à installer dans des espaces de nommage pouvant différer selon les ordinateurs.

L'intérêt de choisir l'espace de nommage du processus racine réside dans le fait que les conteneurs dans lesquels sont exécutés les autres processus héritent de la politique de mitigation PGₖ installée dans l'espace de nommage du processus racine. Ainsi, dans ce cas, la politique de mitigation permet de détecter des tentatives d'attaques dans tous les conteneurs de l'ordinateur EQₙ et de les protéger.

Suite à la réception F_R du signal en provenance du serveur de gestion de sécurité CNode, le module MDETₙ met en œuvre une étape d'installation F_I de la politique de mitigation PGₖ sur le noyau KERₙ, en réponse à ce signal. Par exemple, si ce signal contient l'identifiant d'une vulnérabilité CVE, le module MDETₙ met en œuvre l'installation d'une politique de mitigation permettant de protéger l'ordinateur EQₙ contre cette vulnérabilité.

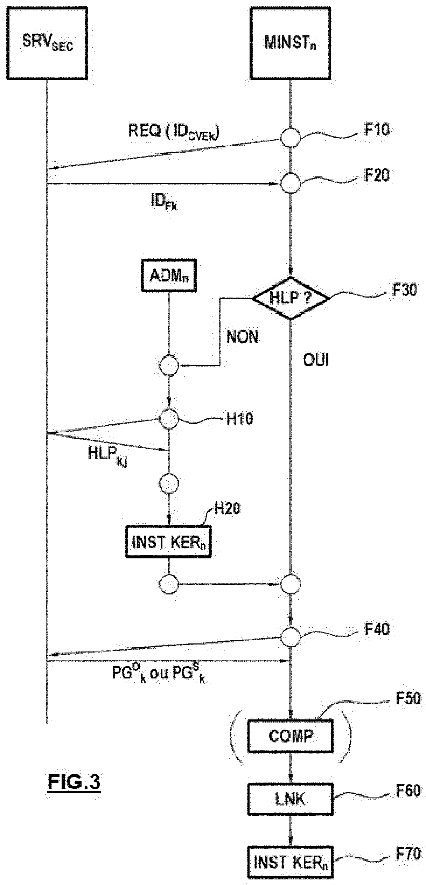

Un mode particulier de mise en œuvre de l'étape d'installation F_I est représenté sur la [Fig.3] et sera décrit ci-après.

Sur la [Fig.1] est également représentée une étape d'exécution F_Ex de la politique de mitigation PGₖ dans le noyau KERₙ. Dans cet exemple, l'exécution de la politique de mitigation est déclenchée par l'exécution (en anglais « call ») d'une fonction fc1 vulnérable appelée lors de l'exécution du processus p1 dans le conteneur C1.

Dans ce mode de réalisation le lancement de l'exécution de cette fonction vulnérable fc1 entraîne indirectement l'exécution d'une fonction du noyau oper_exec() qui entraîne elle-même l'exécution de la politique de mitigation PGₖ. En particulier, l'exécution de la fonction à protéger fc1 entraîne l'exécution d'une fonction exec() dans l'espace utilisateur USRₙ, qui elle-même entraîne l'exécution dans le noyau de la fonction oper_exec().

Dans un autre mode de réalisation, l'exécution d'une fonction à protéger entraîne directement l'exécution d'une fonction dans le noyau associée à une politique de mitigation.

Le déclenchement de la politique de mitigation PGₖ par l'exécution de la fonction du noyau oper_exec() est par exemple permis par un point de déclenchement (« hook » en anglais) bien connu de l'homme du métier. Ce mécanisme permet de lier la politique de mitigation PGₖ à la fonction oper_exec() de telle sorte que la politique de mitigation PGₖest exécutée avant l'attaque, si celle-ci devait se produire. En fonction du résultat de l'exécution de la politique de mitigation, la fonction vulnérable est bloquée ou exécutée.

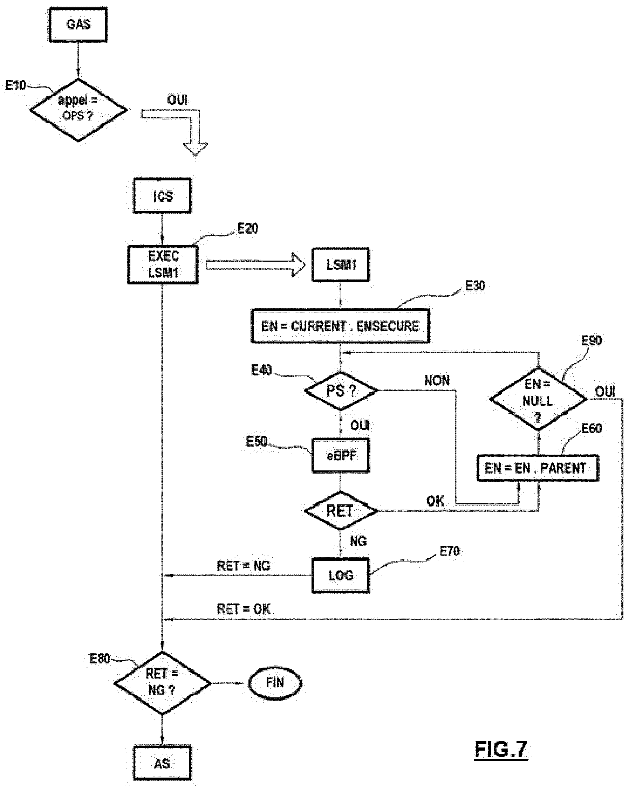

Une telle exécution de la politique de mitigation PGₖ dans le noyau KERₙest notamment décrite dans le document [1] qui propose un procédé de sécurisation utilisant une politique de sécurité, la politique de mitigation prenant le rôle d'une politique de sécurité. Un tel procédé est représenté sur la [Fig.7] et est décrit ultérieurement.

Si la politique de mitigation PGₖ détecte une attaque, un envoi FE_1 d'un signal vers l'espace utilisateur USRₙ est effectué. L'instruction de ce premier envoi FE_1 peut être directement codé dans le programme exécutable de la politique de mitigation.

Ce signal peut par exemple prendre la forme « Timestamp, IPHost, SecurityNamespaceID, CVEID, Msg ». Ici, « Timestamp » correspond à la milliseconde où la politique de mitigation a été déclenchée en réponse à la tentative d'exploitation de la vulnérabilité identifiée « CVEID ». « IPHost » correspond à l'adresse IP de l'ordinateur EQₙ. « SecurityNamespaceID » correspond à l'espace de nommage dédié à la sécurité du conteneur C1 sur lequel a été exécuté le processus p1 qui a déclenché la politique. « Msg » correspond à un message textuel additionnel pour décrire l'attaque. Un exemple d'écriture de ce signal peut être : « 1644824642, 192.168.1.152, 4026532216, CVE-2021-3156, Attempt to exploit CVE-XXXX-XXXX blocked ».

Lors de l'étape F_E2 de l'envoi vers le serveur de gestion de sécurité Cnode, le module MDETₙ peut éventuellement enrichir le message décrit ci-dessus avec des informations de contexte pour caractériser plus précisément le conteneur attaqué (par exemple : nom de l'image conteneur, nom du processus principal, instant de démarrage du conteneur), pour former le message Logᵢ.

Le message Logᵢ envoyé lors de l'étape F_E2 est réceptionné par le serveur de gestion de sécurité CNode lors de l'étape E_R.

Lors de l'étape E_A, un signal représentatif de ce message Logᵢ est ajouté à une liste. Ce signal peut par exemple être une copie du message Logᵢ, ou une version compressée de ce message.

L'exemple de la vulnérabilité CVE-2021-3156 permet d'illustrer l'exécution d'une politique de mitigation. Cette vulnérabilité CVE qui affecte la commande sudo est particulièrement critique étant donné que sudo est utilisé dans de très nombreux environnements. Lorsqu'une commande est passée avec sudo, les arguments de la commande sont d'abord concaténés et les métacaractères sont échappés avec un antislash (par exemple, "\" devient "\\"). Lorsqu'un caractère spécial, par exemple [,{,(,\ ou ^, est lu en tant que caractère normal et non en tant que caractère spécial, il peut être précédé d'un antislash \. On appelle cela échapper un caractère.

En particulier, l' échappement décrit ici n'est pas effectué lorsque sudo est exécuté via le lien symbolique sudoedit -s. De ce fait, si un argument de la commande sudoedit se termine par un seul antislash, les arguments n'étant pas échappés par sudo, le programme va copier des caractères hors des limites du tampon mémoire (« buffer » en anglais), ce qui entraînera un dépassement de la mémoire tampon (« buffer overflow » en anglais).

Une politique de mitigation attachée à la fonction noyau oper_exec() déclenchée par le lancement de l'exécution d'un binaire, peut mitiger la vulnérabilité CVE-2021-3156 en détectant et en bloquant toute tentative d'exécuter la commande sudoedit avec un argument se terminant par un unique antislash.

Un exemple d'extrait de code exécutable en langage eBPF (pour « Extended Berkeley Packet Filter ») d'une telle politique de mitigation est présenté dans l'annexe 1. Dans cet extrait de code, le premier appel à la fonction STRING_HELPER vérifie si la commande exécutée est sudoedit. Le second appel vérifie si un argument se termine avec un unique antislash. Si la commande sudoedit est exécutée avec un unique antislash, alors l'exécution de la commande est annulée (avec l'instruction « RET_DENIED »), sinon, la commande est exécutée (avec l'instruction « RET_ALLOWED »).

Dans cet exemple, la fonction STRING_HELPER est une fonction de support nécessaire à l'exécution de la politique de mitigation. Elle peut notamment être chargée sur le noyau KERₙ comme décrit ultérieurement.

L'annexe 2 présente un extrait de code exécutable en langage eBPF d'une politique de mitigation indiquant un envoi d'un message vers l'espace utilisateur si la commande sudoedit a été lancée avec un unique antislash. Ce message indique la détection de cette attaque par la politique de mitigation. Cet extrait de code peut notamment être ajouté à une ligne précédant l'instruction « return RET_DENIED » dans l'extrait de code présenté par l'annexe 1.

La [Fig.2] représente un ensemble composé d'un serveur de gestion de sécurité CNode, de deux ordinateurs EQ₁ et EQ₂ et d'un serveur de sécurisation SRV_{SEC}.

Le serveur de gestion de sécurité CNode est doté d'un module MIDA mettant en œuvre le procédé d'identification conformément à un mode de réalisation de l'invention. Il est également doté de moyens de communication 13' avec les ordinateurs et d'un module COM de communication avec un utilisateur, par exemple un administrateur de l'ensemble d'ordinateurs.

Chaque ordinateur EQ₁ et EQ₂ est équipé pour mettre en œuvre le procédé de détection conformément à un mode de réalisation de l'invention. Par soucis de clarté, les détails de l'ordinateur EQ₂ ne sont pas détaillés sur la [Fig.2], mais celui-ci comporte comme l'ordinateur EQ₁ les composants permettant de mettre en œuvre le procédé de détection d'attaques informatiques.

L'ordinateur EQ₁ comporte un système logiciel SYS₁ et des composants matériels, dont notamment : un processeur 10, une mémoire vive de type RAM 11, une mémoire morte de type ROM 12, des moyens de communication 13 et une mémoire réins-criptible non volatile, par exemple un disque dur 14.

Les moyens de communication 13 sont configurés pour communiquer avec le serveur de sécurisation SRV_{SEC} et le serveur de gestion de sécurité CNode.

Le serveur SERV_{SEC} et les autres moyens utilisés dans cet exemple pour mettre en œuvre l'étape d'installation F_I d'une politique de mitigation sont présentés ci-dessous.

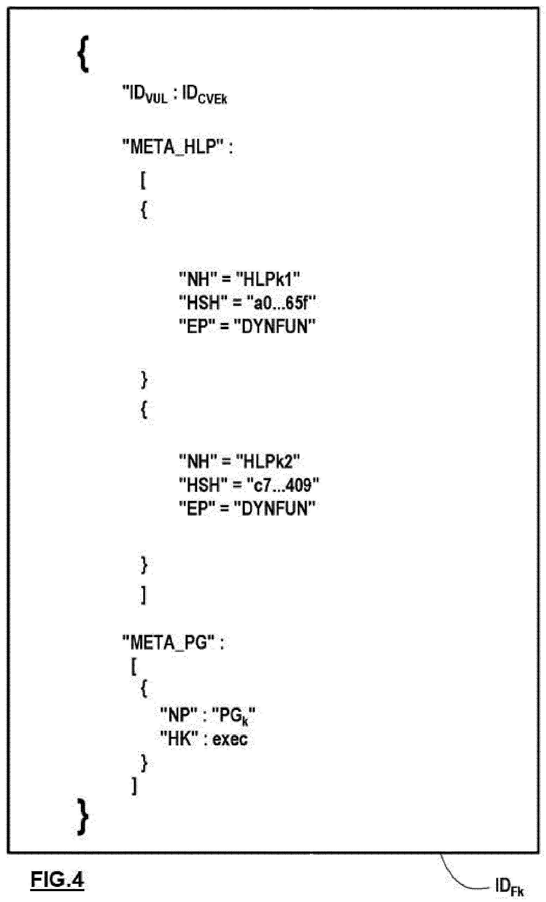

Ce serveur de sécurisation SERV_{SEC} comporte une base de données BD comportant un ensemble d'identifiants CVE de vulnérabilités et en association avec chacun de ces identifiants de vulnérabilité ID_{CVEi}, l'identifiant ID_{Fi} d'un fichier de description d'un programme PGᵢ configuré pour s'exécuter dans le noyau d'un ordinateur et pour mettre en œuvre une politique de mitigation apte à mitiger la vulnérabilité d'identifiant ID_{CVEi}. Le fichier de description identifié par ID_{Fi} est représenté sur la [Fig.4] et est décrit ultérieurement.

Les programmes PGᵢ peuvent être téléchargés par l'équipement EQᵢ auprès du serveur de sécurisation SERV_{SEC}. Par soucis de simplicité, on appelle politique de mitigation un tel programme PGᵢmettant en œuvre une politique de mitigation.

Un identifiant ID_{CVEi} de vulnérabilité est par exemple de la forme CVE-AAAA-IIII, où AAAA est l'année de publication et IIII un numéro unique.

Dans le mode de réalisation décrit ici, les politiques de mitigation PGᵢ télé-chargeables auprès du serveur de sécurisation SERV_{SEC} sont des fichiers sources en langage eBPF, notés PG^{s}ᵢ.

Dans un autre mode de réalisation décrit ici, les politiques de mitigation PGᵢ télé-chargeables auprès du serveur de sécurisation SERV_{SEC} sont des fichiers objets notés PG^{O}ᵢ obtenus par compilation de fichiers sources PG^{S}ᵢ en langage eBPF.

Dans le mode de réalisation décrit ici, les fichiers de description sont au format JSON (en anglais « Java Script Object Notation »).

Dans l'exemple de réalisation décrit ici, le fichier de description ID_{Fi} d'une politique de mitigation PGᵢ comporte :
- dans un champ « ID_{VUL} », l'identifiant ID_{CVEi} de la vulnérabilité que cette politique peut mitiger ; et
- dans une structure « META_PG » des métadonnées du programme de mitigation PGᵢ.

Dans le mode de réalisation décrit ici, les métadonnées du programme de mitigation PGᵢcomportent :
- une métadonnée « NP » correspondant au nom de ce programme PG ; et
- au moins une métadonnée « HK » correspondant à un point de déclenchement (en anglais « hook ») de ce programme.

Dans le mode de réalisation décrit ici, une politique de mitigation PGᵢ peut faire appel à au moins une fonction de support (ou dépendance, en anglais « helper ») HLP_{i,j}.

Dans l'exemple de réalisation décrit ici, lorsqu'une politique PGᵢ fait appel à au moins une fonction de support HLP_{i,j} :
- le fichier de description ID_{Fi} comporte, dans une structure « META_HLP » des métadonnées de cette fonction de support HLP_{i,j} ; et
- ces fonctions de support HLPᵢⱼ peuvent être téléchargées auprès du serveur de sécurisation SERV_{SEC}.

Dans le mode de réalisation décrit ici, les métadonnées META_HLP d'une fonction de support HLP_{i,j} comportent :
- une métadonnée « NH » correspondant au nom de cette fonction de support ;
- une métadonnée « HSH » correspondant à un haché de cette fonction de support ; et
- une métadonnée « EP » correspondant à un point d'entrée de la fonction.

Le système logiciel SYS₁ comporte un noyau ou système d'exploitation KER₁, et un espace utilisateur USR₁. Dans le mode de réalisation décrit ici, le système d'exploitation KER₁ est de type Linux (marque déposée).

Dans le mode de réalisation représenté sur la [Fig.2], le module de détection MDET₁ comporte un sous-module d'installation MINST₁. Ce sous-module MINST, est configuré pour mettre en œuvre l'étape d'installation F_I du procédé de détection conforme à l'invention et dont les principales étapes sont représentées sous forme d'ordinogramme à la [Fig.3].

Dans l'exemple décrit ici, l'espace utilisateur USR₁ comporte :
- un processus racine p0 et un conteneur C1 associés à des droits de niveau utilisateur créés par le processus racine p0 ; et
- un outil d'administration ADM₁ associé à des droits de niveau administrateur.

Dans cet exemple, le lancement de l'exécution d'une fonction vulnérable fc1 (par exemple sudoedit) entraîne l'exécution de la fonction exec dans l'espace utilisateur USRₙ, elle-même lançant l'exécution de la fonction oper_exec à exécuter dans le noyau KER₁.

La fonction vulnérable à protéger fc1 est par exemple la fonction sudoedit mentionnée ci-avant.

Une vulnérabilité CVE telle que la CVE-2021-3156 décrite précédemment peut être détectée au niveau des opérations LSM (pour « Linux Security Module ») déclenchées par le lancement de l'exécution de cette fonction fc1. Dans ce cas, un administrateur central peut effectuer l'étape d'envoi E_E d'un signal reçu par le noyau de chaque ordinateur EQ₁ et EQ₂, ou seulement à un des deux ordinateurs. Comme décrit précédemment, dans ce mode de réalisation, ce signal comprend un identifiant de la vulnérabilité. Cet identifiant permet de mettre en œuvre l'étape d'installation F_I.

La [Fig.3] représente un mode particulier de mise en œuvre de l'étape d'installation F_I du procédé de détection. Dans cet exemple, l'installation F_I est mise en œuvre par un sous-module MINSTₙ d'installation de l'ordinateur EQₙ.

Ce mode particulier est décrit dans la demande de brevet Français déposée le 02/03/2021 sous le numéro 2102026.

On décrit ici cette étape d'installation F_I pour un ordinateur EQₙ pouvant désigner un des ordinateurs EQ₁ et EQ₂ représentés sur la [Fig.2].

Au cours d'une sous-étape F10 de l'étape d'installation F_I, le sous-module d'installation MINSTₙ envoie une requête REQ au serveur SRV_{SEC}, cette requête REQ comportant l'identifiant de vulnérabilité ID_{CVEk} correspondant au signal envoyé E_E par le serveur de gestion de sécurité et reçu (F_R) dans l'espace utilisateur USRₙ de l'ordinateur EQₙ.

Au cours d'une sous-étape F20, le sous-module d'installation MINSTₙ reçoit, en réponse à la requête REQ, le fichier de description dont l'identifiant ID_{Fk} est associé à l'identifiant de vulnérabilité ID_{CVEk} dans la base de données BD du serveur de sécurisation SRV_{SEC}.

Ce fichier de description ID_{Fk} est représenté à la [Fig.4].

Dans l'exemple de réalisation décrit ici, le fichier de description ID_{Fk} comporte :
- dans le champ « ID_{VUL} », l'identifiant ID_{CVEk} de la vulnérabilité ;
- dans la structure « META_PG », les métadonnées d'une politique PGₖ de mitigation de la vulnérabilité ID_{CVEk} ; et
- dans la structure « META_HLP » les métadonnées de deux fonctions de support HLPk1 et HLPk2 appelées par la politique PGₖ.

Dans l'exemple de la [Fig.4], les métadonnées META_PG du programme de mitigation PGₖcomportent :
- la métadonnée « NP » correspondant au nom PGₖ de ce programme ; et
- la métadonnée « HK » correspondant au point de déclenchement du programme PG ₖ constitué ici par l'appel de la fonction oper_exec, qui correspond par exemple à l'exécution d'un binaire.

Dans l'exemple de la [Fig.4], les métadonnées META_HLP de la fonction de support HLPk1 comportent :
- la métadonnée « NH » correspondant au nom HLPk1 de cette fonction de support ;
- la métadonnée « HSH » comprenant un haché « a0...65f » de cette fonction de support ; et
- la métadonnée « EP » correspondant à un point d'entrée DYNFUN dans cette fonction de support, par exemple 4.

Dans l'exemple de la [Fig.4], les métadonnées META_HLP de la fonction de support HLPk2 comportent :
- la métadonnée « NH » correspondant au nom HLPk2 de cette fonction de support ;
- la métadonnée « HSH » comprenant un haché « c7...409 » de cette fonction de support ; et
- la métadonnée « EP » correspondant à un point d'entrée DYNFUN dans cette fonction de support ; par exemple 2.

Au cours d'une sous-étape F30 de l'étape d'installation F_I, le sous-module d'installation MINSTₙ vérifie si les fonctions de support HLPk1 et HLPk2 nécessaires à l'exécution de la politique de mitigation PGₖ et identifiées dans le fichier de description ID_{Fk} reçu à la sous-étape F20 sont déjà installées dans le noyau KERₙ.

Dans le mode de réalisation décrit ici, le module MINSTₙ effectue cette vérification à travers une interface noyau du noyau KERₙ. Cette opération peut être réalisée en interrogeant un système de fichier virtuel, par exemple similaire au système Sysfs décrit en particulier dans le manuel Linux
https://man7.org/linux/man-pages/man5/sysfs.5.html.

En pratique, des fonctions de support génériques susceptibles d'être appelées par de nombreux programmes de mitigation peuvent être préinstallées dans le noyau KERₙ.

Dans l'exemple de réalisation décrit ici, les fonctions de support HLPk1 et HLPk2 sont déjà installées dans le noyau KERₙ et le résultat du test F30 est positif.

Au cours d'une sous-étape F40, le module d'installation MINSTₙ télécharge le programme de mitigation PGₖ identifié dans le fichier de description ID_{Fk} reçu à la sous-étape F20. Dans le mode de réalisation décrit ici, ce téléchargement s'effectue auprès du serveur de sécurisation SRV_{SEC}.

Dans le mode de réalisation décrit ici, ce programme (noté PG^{S}ₖ)est téléchargé en code source au format eBPF.

Au cours d'une sous-étape F50, le module d'installation MINSTₙ compile le programme de mitigation PGₖ.

Au cours d'une sous-étape F60, le programme de mitigation PGₖ est lié avec un fichier d'en-tête HDF selon un mécanisme d'édition de liens (en anglais « link »), pour obtenir un programme de mitigation exécutable PG^{E}ₖ. Dans le mode de réalisation décrit ici, ce fichier d'en-tête HDF est mémorisé dans la mémoire non volatile réins-criptible 14 ([Fig.2]).

Ce fichier d'en-tête HDF est mis à jour à chaque fois qu'une fonction de support HLPk1 et HLPk2 est installée dans le noyau KERₙ.

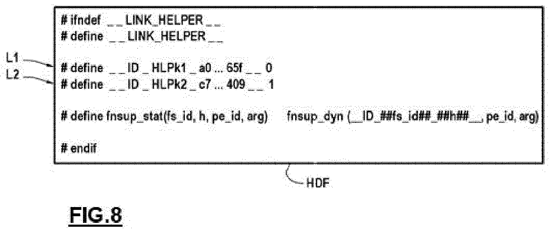

La [Fig.8] illustre un exemple de fichier d'en-tête HDF qui peut comporter, en supposant que seules les fonctions de support HLPk1 et HLPk2 sont installées dans le noyau KERₙ et que la fonction HLPk1 a été installée avant la fonction HLPk2 :
- une première ligne L1 ajoutée au moment de l'installation de la fonction de support HLPk1 dans le noyau KERₙ ; et
- une deuxième ligne L2 ajoutée au moment de l'installation de la fonction de support HLPk2.

Chaque ligne L1, L2 peut comporter :
- la chaîne de caractère « #define ___ID_ », concaténée
- au nom de la fonction de support, c'est-à-dire à la chaîne de caractères « HLPk1 », « HLPk2 », concaténé
- au caractère « _ », concaténé
- au haché de la fonction de support, à savoir dans cet exemple « a0...65f » pour la ligne L1 et « c7...409 » pour la ligne L2, concaténé
- à la chaîne de caractères « __ », concaténé
- à un numéro correspondant à un index de position de la fonction de support dans la mémoire du noyau KERₙ, 0 pour la ligne L1 et 1 pour la ligne L2.

Le fichier d'en-tête HDF peut comporter, après l'ensemble des lignes L1, L2, ... correspondantes à chacune des fonctions de support installées dans le noyau KERₙ, une ligne :
# define fnsup_stat(fs_id, h, pe_id, arg) fnsup_dyn(__ID_##fs_id##_##h##__, pe_id, arg)

L'homme du métier comprend ainsi que si, par exemple, le fichier de mitigation PGₖ, comporte dans son code source l'instruction
fnsup_stat(HLPk1, a0...65f, 4, arg), la sous-étape F60 d'édition de lien traduit cette instruction :
- dans un premier temps en fnsup_dyn(__ID_HLPk1_a0...65f__, 4, arg),
- puis dans un deuxième temps, en fnsup_dyn(0, 4, arg), car, en ligne L1, __ID_HLPk1_a0...65f__ est défini à 0
où 4 correspond au point d'entrée à appeler dans la fonction support HLPk1.

La forme exécutable de la politique de mitigation PGₖ, en binaire, est mémorisée dans la mémoire non volatile 14 de l'ordinateur EQₙ pour installation dans une zone ZPS du noyau KERₙ au cours d'une sous-étape F70 décrite ultérieurement.

Dans le mode de réalisation décrit ici, la fonction fnsup_stat est une fonction statique qui agit comme un proxy pour appeler les fonctions de support installées dans le noyau KERₙ. Dans le mode de réalisation décrit ici, cette fonction comporte trois paramètres :
- un identifiant de la fonction support fs_id, valorisé à « 0 » dans cet exemple ;
- un point d'entrée pe_id dans la fonction support, valorisé à 4 dans cet exemple ; et
- des arguments valorisés ici à arg.

Conformément à ce mode de réalisation de l'invention, lorsque les programmes de mitigation sont chargés dans le noyau (sous-étape F70 décrite ultérieurement), un espace mémoire leur est réservé, et l'adresse de cet espace mémoire est associé à l'identifiant fs_id de fonction de support dans une table TB du noyau KERₙ.

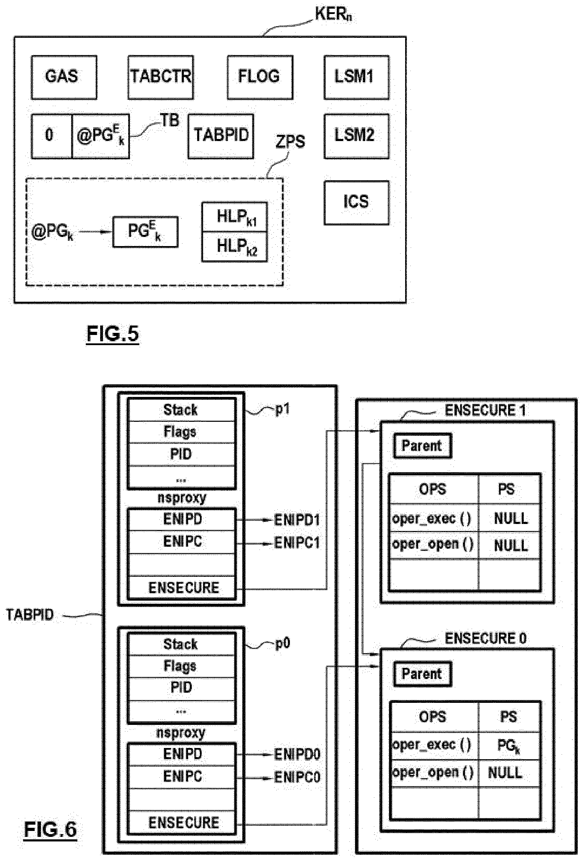

Dans l'exemple de la [Fig.5] qui illustre un noyau KERₙd'un ordinateur EQₙ, la table TB du noyau KERₙ illustre la situation dans laquelle le programme de mitigation PGₖ est installé à l'adresse @PGₖ, avec un identifiant de fonction de support valorisé à 0 de sorte que l'exécution de l'instruction fnsup_dyn(0, 4, arg) déclenche l'exécution de la politique de mitigation PGₖ au point d'entrée 4, avec les arguments arg.

De retour au test F30 ([Fig.3]), s'il s'avère qu'au moins une fonction de support HLPk1 et HLPk2 identifiée dans le fichier de description n'est pas installée dans le noyau KERₙ, le résultat du test F30 est négatif, et cette fonction de support doit être téléchargée (étape H10) auprès du serveur SRV_{SEC} et installée (étape H20) dans la zone ZPS du noyau KERₙ représentée sur la [Fig.5].

Dans le mode de réalisation décrit ici, les fonctions de support sont téléchargées en code objet et destinées à être liées avec le code objet de la politique de mitigation.

Ces étapes de téléchargement sont effectuées par un module de l'espace utilisateur USRₙ bénéficiant de droits administrateur.

Une fois que toutes les fonctions de support nécessaires à l'exécution de la politique de mitigation PGₖ sont installées dans le noyau KERₙ, ce fichier peut être compilé (sous-étape F50), linké (sous-étape F60) et chargé à son tour dans le noyau.

Dans la variante de réalisation décrite précédemment, le programme de mitigation est téléchargé en code source. En variante, le programme de mitigation PGₖ est téléchargé sous forme de code objet (noté PG^{O}ₖ) et la sous-étape F50 de compilation n'est pas nécessaire. Dans un mode de réalisation de cette variante, la compilation du programme de mitigation en code source utilise le fichier de description IF_{FK} de la [Fig.4], et génère en plus du code objet PG^{O}ₖ, un tableau comportant une case pour chaque fonction de support appelée par cette politique de mitigation. La k^{ième} case de ce tableau est réservée pour contenir l'identifiant fs_id de la k^{ième} fonction de support prise dans l'ordre du fichier de description ID_{Fk}. Ce tableau est téléchargé en même temps que le code objet PG^{O}ₖ, au cours de l'étape F40. Au moment de l'édition de liens (sous-étape F60), chaque case k du tableau est remplie avec l'identifiant HLP_{k,1} de la k^{ième} fonction de support.

Il est important de rappeler que dans cet exemple, la politique de mitigation PGₖ vise à mitiger et à détecter la vulnérabilité exploitant l'appel de la fonction fc1 par un processus.

Pour exécuter la politique de mitigation, et dans le mode de réalisation décrit ici, l'invention met en œuvre le procédé de sécurisation décrit dans le document [1].

Ce procédé de sécurisation est représenté sur la [Fig.7].

Dans le mode de réalisation décrit ici, les processus de l'espace utilisateur USRₙ sont isolés grâce au mécanisme d'espaces de nommage. Par exemple, le système d'exploitation Linux propose plusieurs espaces de nommage (par exemple : Network, IPC, PID, User) qui peuvent être utilisés pour isoler des processus dans un mécanisme dans lequel on définit des ensembles de processus, de sorte que les processus d'un ensemble donné ne puissent pas voir les ressources utilisées par un autre ensemble de processus.

Dans l'exemple décrit ici :
- le processus racine p0 est associé respectivement à des espaces de nommage différents ENIPC0 (pour IPC), ENIPD0 (pour PID), ENUser0 (pour User) ;
- les processus du conteneur C1, en l'occurrence le processus p1, sont associés à des espaces de nommage différents ENIPC1, ENIPD1, ENUser1.

Dans l'exemple décrit ici, le processus p1 appelle la fonction fc1 à protéger, dont l'exécution appelle une autre fonction exec s'exécutant dans l'espace utilisateur USRₙ.

Dans le mode de réalisation décrit ici, on considère que les opérations oper_open() d'ouverture de fichier, oper_exec() d'exécution de fonction sont des opérations sensibles.

Dans l'exemple de la [Fig.2] le processus p1 du conteneur C1 appelle :
- l'appel système open() d'ouverture de fichier qui génère lors de son exécution, l'opération sensible oper_open(); et
- l'appel système exec() d'exécution d'un binaire qui génère lors de son exécution, l'opération sensible oper_exec().

Dans l'exemple de la [Fig.2], le processus p0 ne fait pas appel aux fonctions exec(), open().

Conformément au mécanisme décrit dans le document [1] et représenté sur la [Fig.6], les processus p0 et p1 sont également associés à un espace de nommage ENSECURE dédié à la gestion de la sécurité.

Dans le mode de réalisation décrit ici, le processus p0 est associé à l'espace de nommage de gestion de la sécurité ENSECURE0 et le conteneur C1 est associé à l'espace de nommage de gestion de la sécurité ENSECURE1.

La [Fig.6] représente une table TABPID des processus mémorisée dans le noyau KERₙ. Dans le noyau KERₙ, un processus est constitué d'une structure comportant plusieurs champs permettant de gérer son cycle de vie comme son identifiant PID, ses drapeaux (flags en anglais), sa pile (stack en anglais), et un champ nsproxy qui comporte des pointeurs vers les espaces de nommage.

En particulier, le champ nsproxy comporte un pointeur ENSECURE vers l'espace de nommage dédié à la gestion de la sécurité associé à ce processus. Cet espace de nommage définit une structure de données qui comprend notamment la politique de mitigation.

L'espace de nommage ENSECURE d'un processus comporte un lien vers l'espace de nommage ENSECURE du parent de l'espace de nommage de ce processus. Dans l'exemple décrit ici, ENSECURE1 associé au conteneur C1 pointe vers l'espace de nommage ENSECURE0 du processus p0.

Les espaces de nommage ENSECURE forment donc un arbre.

De façon connue de l'homme du métier, un processus peut changer d'espace de nommage pour rejoindre l'espace de nommage d'un de ses processus fils, par exemple en utilisant la commande unshare().

Depuis l'espace utilisateur USRₙ, il est possible d'accéder à l'identifiant d'un espace de nommage mais il n'est pas possible de modifier sa structure. Cette caractéristique permet avantageusement d'empêcher toute modification ou désactivation d'une politique de sécurité ou de mitigation par un conteneur.

Dans l'exemple de réalisation décrit ici, on suppose que le processus p0() a défini une politique de mitigation PGₖ pour sécuriser les appels à l'opération sensible d'exécution de fonction oper_exec(). On suppose qu'il n'a pas défini de politique de sécurité pour sécuriser les appels à l'opération sensible d'ouverture de fichier oper_open().

Dans l'exemple de réalisation décrit ici, on suppose que le conteneur C1 n'a pas défini sa propre politique de sécurité pour sécuriser les appels par ses processus, en l'occurrence p1, à l'opération sensible d'exécution de binaire oper_exec(), en complément de la politique PGₖ définie par le processus p0.

On se place maintenant dans le contexte dans lequel la politique de mitigation PGₖ a été générée par compilation et édition de liens au cours des sous-étapes F50 et F60 de l'étape d'installation F_I. Le programme de mitigation PGₖ stocké dans la mémoire non volatile 14 doit être chargé dans la zone ZPS de politiques de sécurité du noyau KERₙ.

Dans le mode de réalisation de l'étape d'installation F_I décrit ici, le sous-module d'installation MINSTₙ comporte des instructions load_ps() pour charger (sous-étape F70) un programme de mitigation sous forme d'un fichier eBPF compilé sous forme binaire dans la zone ZPS du noyau KERₙ. Cette fonction load_ps() consiste à ouvrir le fichier eBPF compris dans la mémoire non volatile 14 et à le copier vers une interface avec le noyau KERₙ. Comme décrit précédemment, cette étape comprend l'allocation d'un espace mémoire dans la zone ZPS pour cette fonction de mitigation, et l'association de l'adresse de cet espace mémoire avec un identifiant fs_id de fonction de support dans une table TB du noyau KERₙ.

Dans le mode de réalisation décrit ici, cette écriture dans l'interface noyau déclenche un événement pour stocker le programme de mitigation dans l'espace de nommage du processus racine p0.

Dans le mode de réalisation décrit ici en lien avec la [Fig.5], le noyau KERₙ comporte une infrastructure de contrôle de sécurité ICS de gestion des Modules de sécurité Linux, un module de gestion de sécurité Linux LSM1 et éventuellement au moins un autre module de sécurité LSM2, par exemple, un module SELinux ou un module AppAmor.

Dans l'exemple de réalisation décrit ici, le noyau KERₙ comporte une table de contrôle TABCTR qui définit, pour chaque opération sensible OPS (ouverture de fichier, exécution d'un binaire, ...) si le module de sécurité LSM1 veut contrôler ou non ces opérations sensibles.

Dans l'exemple de vérification décrit ici, on suppose que le module de sécurité LSM1 ne souhaite vérifier que l'opération sensible d'exécution d'un binaire oper_exec().

La [Fig.7] représente sous forme d'ordinogramme les principales étapes d'un procédé de sécurisation mis en œuvre par le gestionnaire d'appel système GAS, l'infrastructure de contrôle de sécurité ICS (en anglais framework LSM) et par le module de sécurité LSM1 tels que représentés à la [Fig.5].

Dans l'exemple de réalisation décrit ici, le gestionnaire d'appel système GAS détermine, au cours d'une étape E10, si un appel système déclenché par un processus de l'espace utilisateur doit réaliser une opération sensible OPS. Si c'est le cas, il déclenche l'infrastructure de contrôle de sécurité ICS du noyau KERₙ.

L'infrastructure ICS détermine si l'opération sensible OPS est répertoriée dans la table TABCTR.

Dans l'exemple de réalisation décrit ici, si un processus souhaite réaliser l'opération sensible d'ouvrir un fichier (oper_open()) par appel à la fonction open(), comme cette opération sensible n'est pas vérifiée par le module de sécurité LSM1, le résultat de l'étape de détermination est négatif. Cette opération peut néanmoins être vérifiée par le module de sécurité LSM2, par exemple SELinux et un module AppAmor.

Lorsque le processus p1 appelle la fonction exec, l'infrastructure ICS détermine que cette opération est répertoriée dans la table TABCTR et elle déclenche l'exécution du module de sécurité LSM1 au cours d'une étape E20.

Au cours d'une étape E30, le module de sécurité LSM1 détermine l'espace de nommage associé au processus courant à l'origine de cet appel. Il utilise pour cela le processus courant de la table des processus TABPID. Il s'agit en l'occurrence du processus p1.

Le module de sécurité LSM1 exécute ensuite une boucle pour exécuter les politiques de l'espace de nommage du processus courant liées à cette opération sensible. Dans un mode de réalisation particulier, le module de sécurité LSM1 exécute ensuite une boucle pour exécuter les politiques de ses espaces de nommage ancêtres s'ils existent.

Au cours d'une étape E40 le module de sécurité LSM1 détermine si l'espace de nommage courant a défini une ou plusieurs politiques de sécurité pour vérifier la validité de l'opération sensible.

C'est le cas si la fonction exec() d'exécution d'un binaire a été appelée par le processus p1.

Si c'est le cas, le module de sécurité concerné LSM1 exécute au cours d'une étape E50 la ou les politiques de sécurité définies dans l'espace de nommage dédié à la gestion de sécurité ENSECURE du processus courant pour cette opération sensible.

En l'espèce, au cours de la première itération, aucune politique de mitigation PGₖ n'est exécutée.

Dans le mode de réalisation décrit ici, une politique de mitigation, et en particulier la politique de mitigation PGₖ renvoie un résultat RET négatif si elle détecte un problème de sécurité (traduisant par exemple un comportement malveillant ou anormal) et un résultat positif si elle ne détecte aucun problème de sécurité.

Si cette valeur RET est positive, le module de sécurité détermine, s'il existe, l'espace de nommage parent de l'espace de nommage du processus courant (étape E60) et la boucle se répète.

En l'espèce, au cours de la deuxième itération la politique de mitigation PGₖ de l'espace de nommage ENSECURE0 du processus p0 est exécutée et la fonction open_exec() est bloquée.

Le module de sécurité LSM1 enregistre ce blocage dans un fichier de log FLOG ( [Fig.5]) du noyau KERₙ au cours d'une étape E70 et envoie un résultat négatif RET à l'infrastructure de contrôle de sécurité ICS. Ce fichier de log FLOG peut être analysé par l'administrateur au moyen de l'outil d'administration ADM.

Dans un autre cas où toutes les politiques de sécurité (dans cet exemple, uniquement la politique de mitigation PGₖ est installée) de toute l'arborescence d'espaces de nommages ont été exécutées avec un résultat RET positif, le module de sécurité LSM1 envoie un résultat positif RET à l'infrastructure de contrôle de sécurité ICS (test E90).

Dans le mode de réalisation décrit ici, si l'infrastructure de contrôle de sécurité ICS reçoit un résultat RET positif, elle ne déclenche pas d'action particulière et l'appel système est exécuté, sauf si une action est déclenchée par un autre module de sécurité LSM2, par exemple, un module SELinux ou un module AppAmor.

Dans le mode de réalisation décrit ici, si l'infrastructure de contrôle de sécurité ICS reçoit un résultat RET négatif, l'infrastructure de contrôle de sécurité ICS déclenche une action de sécurité AS au cours d'une étape E80. Cette action peut consister à détruire le processus à l'origine de l'appel et à lever une alerte dans le fichier de log FLOG.
[1] : Snappy : Programmable Kernel-Level Policies for Containers, Maxime Bélair, Sylvie Laniepce, Jean-Marc Menaud, Mars 2021, ACM ISBN 978-1-4503-8104-8/21/03

Ci-dessous sont présentées les annexes.

### [Annexe. 1]

```
  if (secuhub_helper(STRING_HELPER, HASH_STRING, STRING_BINNAME,
 {(void*)0, "/usr/bin/sudo"}) == 1 &&
 secuhub_helper(STRING_HELPER. HASH_STRING, STRING_REGEX,
 {(void*)-1, "^(.*[^\\])?\\$"}) == 1)
 return RET_DENIED;
 return ALLOWED
```

### [Annexe 2]

```
  secuhub_helper(STRING_HELPER, HASH_STRING, ALERT_ONCE, {PR_ERR,
 "Attempt to exploit CVE-2021-3156 blocked"});
```

## Revendications

1. Procédé de détection d'une tentative d'attaque informatique mis en œuvre par un ordinateur (EQₙ) d'un parc d'ordinateurs, ladite attaque exploitant une vulnérabilité (CVEₖ) d'une fonction à protéger (fc1) s'exécutant dans un processus (p1) d'un espace utilisateur (USRₙ) dudit ordinateur (EQₙ), un lancement de l'exécution de ladite fonction à protéger (fc1) ayant pour conséquence l'exécution, avant ladite attaque, d'une fonction du noyau (oper_exec), ledit procédé comportant des étapes de :
- réception (F_R), en provenance d'un serveur de gestion de sécurité (CNode), d'un identifiant (ID_{CVEk}) de politique de mitigation ;
- installation (F_I), dans ledit noyau (KERₙ), d'une politique de mitigation (PGₖ) correspondant audit identifiant de politique de mitigation (PGₖ) ;
- exécution (F_Ex) de ladite politique de mitigation (PGₖ) dans ledit noyau (KERₙ), ladite politique de mitigation (PGₖ) étant associée à ladite fonction du noyau (oper_exec) et étant chargée dans un espace de nommage (ENSECURE1) du noyau associé audit processus (p1) et dédié à la sécurité ;
et, si ladite politique de mitigation détecte lors de son exécution un vecteur d'attaque pris en charge par ladite politique et ciblant ladite fonction à protéger (fc1) :
- envoi (F_E) audit serveur de gestion de sécurité (CNode) d'un message (Logᵢ) comportant une donnée représentative dudit processus (p1).

2. Procédé selon la revendication 1 **caractérisé en ce que** l'exécution de ladite fonction à protéger (fc1) entraîne l'exécution d'une autre fonction (exec) dudit espace utilisateur (USRₙ) qui entraîne l'exécution de ladite fonction (oper_exec) du noyau.

3. Procédé selon la revendication 1 ou 2 dans lequel ladite politique de mitigation (PGₖ) est chargée dans un espace de nommage (ENSECURE0) dédié à la sécurité et associé à un processus racine dudit ordinateur (EQₙ ).

4. Procédé selon l'une des revendications 1 à 3 dans lequel ledit serveur de sécurité (CNode) est configuré pour envoyer l'identifiant de politique de mitigation à une pluralité d'ordinateurs dudit parc d'ordinateurs.

5. Procédé selon l'une des revendications 1 à 4 dans lequel ladite étape d'installation (F_I) comporte des sous-étapes de :
- envoi (F10) d'une requête (REQ) comportant ledit identifiant (ID_{CVEk}) de politique de mitigation à un serveur de sécurisation (SRV_{SEC}) ;
- obtention (F20), en réponse à la requête (REQ), d'un fichier (ID_{Fk}) de description de ladite politique de mitigation (PGₖ) ;
- obtention (F40, F50) d'un code objet (PG^{O}ₖ) de la politique de mitigation (PGₖ) identifiée dans ledit fichier de description (ID_{Fk}) ;
- génération (F60) d'un code exécutable (PG^{E}ₖ) de ladite politique de mitigation (PGₖ) à partir dudit code objet (PG^{O}ₖ); et
- installation (F70) du code exécutable (PG^{E}_{K}) dans ledit noyau (KERₙ).

6. Procédé selon l'une des revendications 1 à 5 dans lequel ladite étape d'envoi (F_E) dudit au moins un message (Logᵢ) au serveur de gestion de sécurité (CNode) est mise en œuvre à partir dudit espace utilisateur (USRₙ) en réponse à l'envoi (F_E1) d'un signal par ledit noyau (KERₙ) audit espace utilisateur (USRₙ) pour signaler ladite détection dudit vecteur d'attaque.

7. Procédé selon l'une des revendications 1 à 6 dans lequel ledit au moins un message (Logᵢ) comporte au moins une information parmi :
- un identifiant (IPₙ) dudit ordinateur (EQₙ) ;
- une donnée représentative dudit espace de nommage (ENSECURE1) associé audit processus (p1) et dédié à la sécurité ;
- un identifiant de ladite vulnérabilité (CVEₖ) ;
- un temps auquel l'exécution de la politique de mitigation a été déclenchée.

8. Procédé d'identification mis en œuvre par un serveur de gestion de sécurité (CNode) pour identifier une tentative d'attaque informatique sur au moins un ordinateur (EQₙ) d'un parc d'ordinateurs, ladite attaque exploitant une vulnérabilité (CVEₖ) d'une fonction (fc1) à protéger s'exécutant dans un espace utilisateur de l'ordinateur, ledit procédé comportant des étapes de :
- envoi (E_E) au dit au moins un ordinateur d'un identifiant de ladite politique de mitigation (PGₖ).
- réception (E_R) en provenance dudit au moins un ordinateur (EQₙ), d'un message (Logᵢ) comportant une donnée représentative d'un processus (p1) s'exécutant dans ledit espace utilisateur, lorsqu'un vecteur d'attaque ciblant ladite fonction à protéger (fc1) a été détecté, dans le noyau de l'ordinateur, par l'exécution d'une politique de mitigation (PGₖ) chargée dans un espace de nommage (ENSECURE1) du noyau dédié à la sécurité et associé à ce processus ;
- ajout (E_A) à une liste d'une donnée représentative dudit message (Logᵢ).

9. Procédé selon la revendication 8 comportant une étape d'envoi, à une pluralité d'ordinateurs du parc d'ordinateurs, dudit identifiant de la politique de mitigation.

10. Module de détection (MDETₙ) d'une tentative d'attaque informatique dans un ordinateur (EQₙ) d'un parc d'ordinateurs, ladite attaque exploitant une vulnérabilité (CVEₖ) d'une fonction à protéger (fc1) s'exécutant dans un processus (p1) d'un espace utilisateur (USRₙ) dudit ordinateur (EQₙ), un lancement de l'exécution de ladite fonction à protéger (fc1) ayant pour conséquence l'exécution, avant ladite attaque, d'une fonction du noyau (oper_exec), ledit module comportant :
- un sous-module de réception, en provenance d'un serveur de gestion de sécurité (CNode), d'un identifiant (ID_{CVEk}) de politique de mitigation ;
- un sous-module d'installation, dans ledit noyau (KERₙ), d'une politique de mitigation (PGₖ) correspondant audit identifiant de politique de mitigation (PGₖ) ;
- un sous-module d'exécution (M_Ex) configuré pour exécuter ladite politique de mitigation (PGₖ) dans ledit noyau (KERₙ), ladite politique de mitigation (PGₖ) étant associée à ladite fonction du noyau (oper_exec) et étant chargée dans un espace de nommage (ENSECURE1) du noyau associé audit processus (p1) et dédié à la sécurité ;
- un sous-module d'envoi (M_E) configuré pour envoyer audit serveur de gestion de sécurité (CNode) un message (Logᵢ) comportant une donnée représentative dudit processus (p1), ledit sous-module d'envoi (M_E) étant configuré pour envoyer ledit message si ladite politique de mitigation détecte un vecteur d'attaque pris en charge par ladite politique et ciblant ladite fonction à protéger (fc1).

11. Module (MIDA) d'identification pouvant être mis en œuvre par un serveur de gestion de sécurité (CNode), ledit module (MIDA) étant configuré pour identifier une tentative d'attaque informatique sur au moins un ordinateur (EQₙ) d'un parc d'ordinateurs, ladite attaque exploitant une vulnérabilité (CVEₖ) d'une fonction (fc1) à protéger s'exécutant dans un espace utilisateur dudit ordinateur, ledit module (MIDA) comportant :
- un sous-module d'envoi au dit au moins un ordinateur d'un identifiant de ladite politique de mitigation (PGₖ).
- un sous-module de réception (M_R) configuré pour recevoir en provenance dudit au moins un ordinateur (EQₙ), un message (Logᵢ) comportant une donnée représentative d'un processus (p1) s'exécutant ledit espace utilisateur, lorsqu'un vecteur d'attaque ciblant la fonction à protéger a été détecté, dans le noyau de l'ordinateur, par l'exécution d'une politique de mitigation (PGₖ) chargée dans un espace de nommage (ENSECURE1) du noyau dédié à la sécurité et associé au processus (p1) ;
- un sous-module d'ajout (M_A) configuré pour ajouter à une liste une donnée représentative dudit message (Logᵢ).

12. Programme d'ordinateur comprenant des instructions qui, lorsque le programme est exécuté par un ordinateur, conduisent celui-ci à mettre en œuvre un procédé selon l'une des revendications 1 à 9.

13. Support d'enregistrement, lisible par un ordinateur (EQₙ) et/ou un serveur (CNode), d'un programme informatique comportant des instructions pour l'exécution des étapes d'un procédé selon au moins une des revendications 1 à 9.

## Patentansprüche

1. Verfahren zur Erkennung eines Cyberangriffsversuchs, das von einem Computer (EQₙ) eines Computerparks durchgeführt wird, wobei der Angriff eine Schwachstelle (CVEₖ) einer zu schützenden Funktion (fc1) ausnutzt, die in einem Prozess (p1) eines Benutzerraums (USRₙ) des Computers (Eqₙ) ausgeführt wird, wobei ein Starten der Ausführung der zu schützenden Funktion (fc1) die Ausführung, vor dem Angriff, einer Funktion des Kernels (oper_exec) zur Folge hat, wobei das Verfahren die folgenden Schritte umfasst:
- Empfangen (F_R) einer Mitigationsstrategiekennung (ID_{CVEk}) von einem Sicherheitsverwaltungsserver (CNode);
- Installation (F_I) einer Mitigationsstrategie (PGₖ), die der Kennung der Mitigationsstrategie (PGₖ) entspricht, in dem Kernel (KERₙ);
- Ausführen (F_Ex) der Mitigationsstrategie (PGₖ) in dem Kernel (KERₙ), wobei die Mitigationsstrategie (PGₖ) der Funktion des Kernels (oper_exec) zugeordnet wird und in einen Namensraum (ENSECURE1) des Kernels geladen wird, der dem Prozess (p1) zugeordnet ist und der Sicherheit dediziert ist;
und, falls die Mitigationsstrategie bei ihrer Ausführung einen Angriffsvektor detektiert, der von der Strategie unterstützt wird und auf die zu schützende Funktion (fc1) abzielt:
- Senden (F_E) einer Nachricht (Logᵢ), die ein für den Prozess (p1) repräsentatives Datenelement umfasst, an den Sicherheitsverwaltungsserver (CNode).

2. Verfahren nach Anspruch 1, **dadurch gekennzeichnet, dass** die Ausführung der zu schützenden Funktion (fc1) die Ausführung einer anderen Funktion (exec) des Benutzerraums (USRₙ) bewirkt, die die Ausführung der Funktion (oper_exec) des Kernels bewirkt.

3. Verfahren nach Anspruch 1 oder 2, wobei die Mitigationsstrategie (PGₖ) in einen Namensraum (ENSECURE0) geladen wird, der der Sicherheit dediziert ist und einem Root-Prozess des Computers (EQₙ) zugeordnet ist.

4. Verfahren nach einem der Ansprüche 1 bis 3, wobei der Sicherheitsserver (CNode) dazu ausgelegt ist, die Mitigationsstrategiekennung an eine Mehrzahl von Computern des Computerparks zu senden.

5. Verfahren nach einem der Ansprüche 1 bis 4, wobei der Installationsschritt (F_I) die folgenden Teilschritte umfasst:
- Senden (F10) einer Anforderung (REQ), die die Mitigationsstrategiekennung (ID_{CVEk}) umfasst, an einen Sicherungsserver (SRV_{SEC});
- Erhalten (F20), als Reaktion auf die Anforderung (REQ), einer Beschreibungsdatei (ID_{Fk}) der Mitigationsstrategie (PGₖ);
- Erhalten (F40, F50) eines Objektcodes (PG^{O}ₖ) der in der Beschreibungsdatei (ID_{Fk}) identifizierten Mitigationsstrategie (PGₖ);
- Erzeugen (F60) eines ausführbaren Codes (PG^{E}ₖ) der Mitigationsstrategie (PGₖ) ausgehend von dem Objektcode (PG^{O}ₖ); und
- Installation (F70) des ausführbaren Codes (PG^{E}ₖ) in dem Kernel (KERₙ).

6. Verfahren nach einem der Ansprüche 1 bis 5, wobei der Schritt des Sendens (F_E) der mindestens einen Nachricht (Logᵢ) an den Sicherheitsverwaltungsserver (CNode) von dem Benutzerraum (USRₙ) aus als Reaktion auf das Senden (F_E1) eines Signals durch den Kernel (KERₙ) an den Benutzerraum (USRₙ) zur Signalisierung der Erkennung des Angriffsvektors durchgeführt wird.

7. Verfahren nach einem der Ansprüche 1 bis 6, wobei die mindestens eine Nachricht (Logᵢ) mindestens eine Informationen umfasst unter:
- einer Kennung (IPₙ) des Computers (EQₙ);
- einem Datenelement, das für den Namensraum (ENSECURE1) repräsentativ ist, der dem Prozess (p1) zugeordnet ist und der Sicherheit dediziert ist;
- einer Kennung der Schwachstelle (CVEₖ);
- einer Zeit, zu der die Ausführung der Mitigationsstrategie ausgelöst worden ist.

8. Verfahren zur Identifizierung, das von einem Sicherheitsverwaltungsserver (CNode) durchgeführt wird, um einen Cyberangriffsversuch auf mindestens einen Computer (EQₙ) eines Computerparks zu identifizieren, wobei der Angriff eine Schwachstelle (CVEₖ) einer zu schützenden Funktion (fc1) ausnutzt, die in einem Benutzerraum des Computers ausgeführt wird, wobei das Verfahren die folgenden Schritte umfasst:
- Senden (E_E) einer Kennung der Mitigationsstrategie (PGₖ) an den mindestens einen Computer.
- Empfangen (E_R) einer Nachricht (Logᵢ) von dem mindestens einen Computer (EQₙ), die ein Datenelement umfasst, das für einen Prozess (p1) repräsentativ ist, der in dem Benutzerraum ausgeführt wird, wenn auf die zu schützende Funktion (fc1) abzielender Angriffsvektor in dem Kernel des Computers durch das Ausführen einer Mitigationsstrategie (Pgk)ₖ) erkannt worden ist, die in einen Namensraum (ENSECURE1) des Kernels geladen wird, der der Sicherheit dediziert ist und diesem Prozess zugeordnet ist;
- Hinzufügen (E_A) eines Datenelements, das für die Nachricht (Logᵢ) repräsentativ ist, zu einer Liste.

9. Verfahren nach Anspruch 8, umfassend einen Schritt des Sendens der Kennung der Mitigationsstrategie an eine Mehrzahl von Computern des Computerparks.

10. Modul zur Erkennung (MDETₙ) eines Cyberangriffsversuchs in einem Computer (EQₙ) eines Computerparks, wobei der Angriff eine Schwachstelle (CVEₖ) einer zu schützenden Funktion (fc1) ausnutzt, die in einem Prozess (p1) eines Benutzerraums (USRₙ) des Computers (Eqₙ) ausgeführt wird, wobei ein Starten der Ausführung der zu schützenden Funktion (fc1) die Ausführung, vor dem Angriff, einer Funktion des Kernels (oper_exec) zur Folge hat, wobei das Modul Folgendes umfasst:
- ein Untermodul zum Empfangen einer Mitigationsstrategiekennung (ID_{CVEk}) von einem Sicherheitsverwaltungsserver (CNode);
- ein Untermodul zur Installation einer Mitigationsstrategie (PGₖ), die der Kennung der Mitigationsstrategie (PGₖ) entspricht, in dem Kernel (KERₙ);
- ein Untermodul zum Ausführen (M_Ex), das dazu ausgelegt ist, die Mitigationsstrategie (PGₖ) in dem Kernel (KERₙ) auszuführen, wobei die Mitigationsstrategie (PGₖ) der Funktion des Kernels (oper_exec) zugeordnet wird und in einen Namensraum (ENSECURE1) des Kernels geladen wird, der dem Prozess (p1) zugeordnet ist und der Sicherheit dediziert ist;
- ein Untermodul zum Senden (M_E), das dazu ausgelegt ist, an den Sicherheitsverwaltungsserver (CNode) eine Nachricht (Logᵢ) zu senden, die ein Datum umfasst, das für den Prozess (p1) repräsentativ ist, wobei das Untermodul zum Senden (M_E) dazu ausgelegt ist, die Nachricht zu senden, wenn die Mitigationsstrategie einen Angriffsvektor erkennt, der von der Strategie unterstützt wird und auf die zu schützende Funktion (fc1) abzielt.

11. Identifizierungsmodul (MIDA), das von einem Sicherheitsverwaltungsserver (CNode) eingesetzt werden kann, wobei das Modul (MIDA) dazu ausgelegt ist, einen Cyberangriffsversuch auf mindestens einen Computer (EQₙ) eines Computerparks zu identifizieren, wobei der Angriff eine Schwachstelle (CVEₖ) einer zu schützenden Funktion (fc1) ausnutzt, die in einem Benutzerraum des Computers ausgeführt wird, wobei das Modul (MIDA) umfasst:
- ein Untermodul zum Senden einer Kennung der Mitigationsstrategie (PGₖ) an den mindestens einen Computer.
- ein Untermodul zum Empfangen (M_R), das dazu ausgelegt ist, eine Nachricht (Logᵢ) von dem mindestens einen Computer (EQₙ) zu empfangen, die ein Datenelement umfasst, das für einen Prozess (p1) repräsentativ ist, der in dem Benutzerraum ausgeführt wird, wenn ein auf die zu schützende Funktion abzielender Angriffsvektor in dem Kernel des Computers durch das Ausführen einer Mitigationsstrategie (PGₖ) erkannt worden ist, die in einen Namensraum (ENSECURE1) des Kernels geladen wird, der der Sicherheit dediziert ist und diesem Prozess (p1) zugeordnet ist;
- ein Untermodul zum Hinzufügen (M_A), das dazu ausgelegt ist, ein Datenelement, das für die Nachricht (Logᵢ) repräsentativ ist, zu einer Liste hinzuzufügen.

12. Computerprogramm, das Anweisungen umfasst, die bei der Ausführung des Programms durch einen Computer diesen dazu veranlassen, ein Verfahren nach einem der Ansprüche 1 bis 9 durchzuführen.

13. Speichermedium, das durch einen Computer (EQₙ) und/oder einen Server (CNode) lesbar ist, für ein Computerprogramm, das Anweisungen zum Ausführen der Schritte eines Verfahrens nach mindestens einem der Ansprüche 1 bis 9 umfasst.

## Claims

1. Method for detecting an attempted cyber attack, which method is implemented by a computer (EQₙ) of a pool of computers, said attack exploiting a vulnerability (CVEₖ) of a function to be protected (fc1) being executed in a process (p1) of a user space (USRₙ) of said computer (EQₙ), launch of execution of said function to be protected (fc1) resulting in execution, prior to said attack, of a kernel function (oper_exec), said method comprising steps of:
- reception (F_R), from a security management server (CNode), of a mitigation policy identifier (ID_{CVEk});
- installation (F_I), in said kernel (KERₙ), of a mitigation policy (PGₖ) corresponding to said mitigation policy (PGₖ) identifier;
- execution (F_Ex) of said mitigation policy (PGₖ) in said kernel (KERₙ), said mitigation policy (PGₖ) being associated with said kernel function (oper_exec) and being loaded into a namespace (ENSECURE1) of the kernel associated with said process (p1) and dedicated to security;
and, if said mitigation policy detects during its execution an attack vector addressed by said policy and targeting said function to be protected (fc1):
- sending (F_E) to said security management server (CNode) a message (Logᵢ) containing a datum representative of said process (p1).

2. Method according to Claim 1, **characterized in that** execution of said function to be protected (fc1) results in execution of another function (exec) of said user space (USRₙ) which results in execution of said kernel function (oper_exec).

3. Method according to Claim 1 or 2, wherein said mitigation policy (PGₖ) is loaded into a namespace (ENSECURE0) dedicated to security and associated with a root process of said computer (EQₙ).

4. Method according to any of Claims 1 to 3, wherein said security server (CNode) is configured to send the mitigation policy identifier to a plurality of computers of said pool of computers.

5. Method according to any of Claims 1 to 4, wherein said installation step (F_I) comprises substeps of:
- sending (F10) a request (REQ) containing said mitigation policy identifier (ID_{CVEk}) to a security server (SRV_{SEC});
- obtaining (F20), in response to the request (REQ), a description file (ID_{Fk}) describing said mitigation policy (PGₖ);
- obtaining (F40, F50) an object code (PG^{O}ₖ) of the mitigation policy (PGₖ) identified in said description file (ID_{Fk});
- generation (F60) of an executable code (PG^{E}ₖ) of said mitigation policy (PGₖ) from said object code (PG^{O}ₖ); and
- installation (F70) of the executable code (PG^{E}ₖ) in said kernel (KERₙ).

6. Method according to any of Claims 1 to 5, wherein said step of sending (F_E) said at least one message (Logᵢ) to the security management server (CNode) is implemented from said user space (USRₙ) in response to said kernel (KERₙ) sending (F_E1) a signal to said user space (USRₙ) to signal said detection of said attack vector.

7. Method according to any of Claims 1 to 6, wherein said at least one message (Logᵢ) contains at least one piece of information among:
- an identifier (IPₙ) of said computer (EQₙ);
- a datum representative of said namespace (ENSECURE1) associated with said process (p1) and dedicated to security;
- an identifier of said vulnerability (CVEₖ);
- a time at which the execution of the mitigation policy was triggered.

8. Identification method implemented by a security management server (CNode) to identify an attempted cyber attack on at least one computer (EQₙ) of a pool of computers, said attack exploiting a vulnerability (CVEₖ) of a function (fc1) to be protected being executed in a user space of the computer, said method comprising steps of:
- sending (E_E) to said at least one computer an identifier of said mitigation policy (PGₖ);
- reception (E_R), from said at least one computer (EQₙ), of a message (Logᵢ) containing a datum representative of a process (p1) being executed in said user space, when an attack vector targeting said function to be protected (fc1) has been detected, in the kernel of the computer, by the execution of a mitigation policy (PGₖ) loaded into a namespace (ENSECURE1) of the kernel dedicated to security and associated with this process;
- addition (E_A) to a list of a datum representative of said message (Logᵢ).

9. Method according to Claim 8, comprising a step of sending said mitigation policy identifier to a plurality of computers of the pool of computers.

10. Module (MDETₙ) for detecting an attempted cyber attack in a computer (EQₙ) of a pool of computers, said attack exploiting a vulnerability (CVEₖ) of a function to be protected (fc1) being executed in a process (p1) of a user space (USRₙ) of said computer (EQₙ) , launch of execution of said function to be protected (fc1) resulting in execution, prior to said attack, of a kernel function (oper_exec), said module comprising:
- a sub-module for reception, from a security management server (CNode), of a mitigation policy identifier (ID_{cvek});
- a sub-module for installation, in said kernel (KERₙ), of a mitigation policy (PGₖ) corresponding to said mitigation policy (PGₖ) identifier;
- an execution sub-module (M_Ex) configured to execute said mitigation policy (PGₖ) in said kernel (KERₙ), said mitigation policy (PGₖ) being associated with said kernel function (oper_exec) and being loaded into a namespace (ENSECURE1) of the kernel associated with said process (p1) and dedicated to security;
- a sending sub-module (M_E) configured to send to said security management server (CNode) a message (Logᵢ) containing a datum representative of said process (p1), said sending sub-module (M_E) being configured to send said message if said mitigation policy detects an attack vector addressed by said policy and targeting said function to be protected (fc1).

11. Identification module (MIDA) able to be implemented by a security management server (CNode), said module (MIDA) being configured to identify an attempted cyber attack on at least one computer (EQₙ) of a pool of computers, said attack exploiting a vulnerability (CVEₖ) of a function (fc1) to be protected being executed in a user space of said computer, said module (MIDA) comprising:
- a sub-module for sending to said at least one computer an identifier of said mitigation policy (PGₖ);
- a reception sub-module (M_R) configured to receive, from said at least one computer (EQₙ), a message (Logᵢ) containing a datum representative of a process (p1) being executed in said user space, when an attack vector targeting the function to be protected has been detected, in the kernel of the computer, by the execution of a mitigation policy (PGₖ) loaded into a namespace (ENSECURE1) of the kernel dedicated to security and associated with the process (p1);
- an addition sub-module (M_A) configured to add to a list a datum representative of said message (Logᵢ).

12. Computer program comprising instructions that, when the program is executed by a computer, cause the latter to implement a method according to any of Claims 1 to 9.

13. Recording medium, readable by a computer (EQₙ) and/or a server (CNode), for recording a computer program comprising instructions for the execution of the steps of a method according to at least one of Claims 1 to 9.
